(19)

**Europäisches Patentamt**

**European Patent Office**

**Office européen des brevets**

(11) **EP 4 711 882 A1**

(12) **EUROPEAN PATENT APPLICATION**

(43) Date of publication:
**18.03.2026 Bulletin 2026/12**

(21) Application number: **24200637.7**

(22) Date of filing: **16.09.2024**

(51) International Patent Classification (IPC):
**G05D 21/02** *(2006.01)* **G05D 11/00** *(2006.01)*
**C02F 1/66** *(2023.01)*

(52) Cooperative Patent Classification (CPC):
**G05D 21/02; C02F 1/008; C02F 1/66;**
C02F 2209/01; C02F 2209/02; C02F 2209/04;
C02F 2209/05; C02F 2209/06; C02F 2209/08;
C02F 2209/11; C02F 2209/40; C02F 2301/046

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Sartorius Stedim Biotech GmbH**
**37079 Göttingen (DE)**

(72) Inventors:
  • **Stark, Oliver**
    **37079 Göttingen (DE)**
  • **Steinwedel, Tobias**
    **37079 Göttingen (DE)**

  • **Kühnel, Christian**
    **37079 Göttingen (DE)**
  • **Knöchelmann, Elias**
    **37079 Göttingen (DE)**
  • **Meyer-Heinrichs, Karolina**
    **37079 Göttingen (DE)**
  • **Kuchemüller, Kim Beatrice**
    **37079 Göttingen (DE)**
  • **Bruchwalski, Jonas**
    **37079 Göttingen (DE)**
  • **Koch, Niklas**
    **37079 Göttingen (DE)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **CONTINUOUS PH ADJUSTMENT METHOD**

(57) The invention relates to a method for adjusting the pH of a process liquid in a continuous process, comprising:

(a.) providing the process liquid in a first volume flow having a first flow rate (f1),

(b.) providing at least one treatment liquid in a second volume flow having a second flow rate (f2),

(c.) mixing the at least one treatment liquid with the process liquid to produce a pH-adjusted process liquid,

wherein the second flow rate is composed of a predetermined portion (fp) and a variable portion (fv), and wherein the variable portion (fv) is controlled based on at least one liquid parameter (pHa) of the pH-adjusted process liquid.

Fig. 1

EP 4 711 882 A1

## Description

The present invention relates to a method for adjusting the pH of a process liquid in a continuous process.

The adjustment of pH in a process liquid is of high relevance in a multitude of bioprocesses, including fermentation, chemical synthesis, extraction and purification of compounds, formulation and stabilization of active substances, controlling the pH value of foods, water and wastewater treatment, and the like.

For example, known processes for adjusting the pH are carried out in batches. Therein, a batch of process liquid to be treated is usually present in a container or tank, and a treatment liquid (usually acid or base) is added to the entire batch of process fluid until a target pH value is reached. While the treatment liquid is added, the batch volume is mixed, e.g. by an active mixer.

When adjusting the pH, it is critical to not overshoot the target pH value by adding too much of the treatment liquid. In the context of bioprocesses, such a pH overshoot may have detrimental effects which can even be irreversible, such as the denaturation of biomolecules of interest. Therefore, the controls governing bioprocesses are often rather strict, only allowing for deviations from the target pH value by 0.1 units or less. Even in cases where a pH overshoot can be remedied, e.g. by quickly adding a neutralizing liquid, this introduces an additional salt load into the process liquid which is generally unwanted in a bioprocess as it may lead to increased charge variations.

To avoid a pH overshoot, known processes therefore add the treatment liquid slowly to the process liquid in a "cautious", "well-dosed" and "pH sensitive" treatment paradigm, while continuously monitoring the pH value of the process liquid batch and controlling the amount of treatment liquid added, for example by means of a dynamic controller such as a proportional-integral-derivative (PID) controller. Such a controller commonly controls the treatment liquid pump. Known approaches involving dynamic controllers are based on empirically determined parameters which are dependent on the process liquid to be treated and the treatment liquid applied to it, e.g. the compound and concentration of acid or base. Apart therefrom, the volumetric flow rate required to maintain a specified reaction time and the quantity of solution in the small container must be specified as influencing variables for the system in question, which must be taken into account during parameterization of the dynamic controller.

A drawback of known processes is that the pH adjustment is slow. Especially, in bioprocesses requiring that the process liquid is exposed to a specific pH environment only for a predetermined time period before being neutralized, if the pH is adjusted slowly, adverse secondary reactions in the incompletely pH-adjusted process fluid may occur, e.g. harming a biomolecule of interest.

Another drawback of known processes arises from the fact that the pH of the process fluid is usually measured at the outlet of the batch container, i.e., at a location far from where the treatment liquid is introduced into the container. This leads to a substantial delay between the addition of treatment liquid and the feedback (e.g.: change in pH) that is provided to the controller. Such a delay may lead to unwanted or out-of-spec pH values, which is detrimental.

Another drawback of continuous processes arises from the fact that the stream of supplied process liquid may change suddenly, in particular in terms of the composition and/or flow rate. The supply of process liquid may even come to an intermittent stop, for example during a change in the upstream part of a continuous process line or due to an intermittent failure of the system. Known methods provide no satisfactory means to react to this type of variance, which may lead to pH values outside the allowable range.

Against this background, it is an object of the present invention to provide an improved pH adjustment method that overcomes at least some of the drawbacks of the prior art. In particular, it is an object of the invention to provide a pH adjustment method which may be carried out in a continuous process, and which allows for quicker and/or more accurate adjustment of the pH value compared to known methods. It is a further object of the invention to provide a pH adjustment method that is more resilient than known methods against sudden and/or intermittent changes in the stream of process liquid.

The object named above is solved in accordance with the present invention by a method for adjusting the pH of a process liquid in a continuous process, comprising:

     a. providing the process liquid in a first volume flow having a first flow rate,
     b. providing at least one treatment liquid in a second volume flow having a second flow rate,
     c. mixing the at least one treatment liquid with the process liquid to produce a pH-adjusted process liquid,

         wherein the second flow rate is composed of a predetermined portion and a variable portion, wherein the variable portion is controlled based on at least one liquid parameter of the pH-adjusted process liquid.

The method for adjusting the pH is also referred to herein as "pH adjustment method" or "adjustment method".

In the context of the present disclosure, a process liquid is intended to be understood as a liquid that is subjected to a treatment or modification process to alter its chemical or physical properties, for example its pH value or its viral load. For example, the process liquid may comprise a substance which is primarily targeted by the pH adjustment. Without being limited thereto, such a substance may be a chemical compound, a viral particle, an organism or a metal ion. For example, the substance may be reacted, converted, precipitated, extracted, purified, formulated, stabilized, activated and/or inactivated by adjusting the pH value.

In the context of the present disclosure, a continuous process is understood to be a process where input materials, especially the process liquid and treatment liquid(s), and output materials flow through a flow system in a sustained manner over time, allowing for the steady production of an output product over an extended period. For example, a continuous process may be designed to operate with minimal interruptions, including scenarios where there are intermittent breaks in the generation or supply of input materials, as long as the overall operation is maintained without complete shutdowns and the process is capable of resuming seamlessly after such breaks.

To carry out the method of the present invention, in a continuous process, a process liquid is mixed with at least one treatment liquid to generate a pH-adjusted process liquid. The pH-adjusted process liquid is passed by at least one sensor, such as a flow cell, where at least one liquid parameter of the pH-adjusted process liquid is determined. Optionally, said pH-adjusted process liquid may be passed through a flow path, whereby a treated process liquid is generated. Further optionally, a neutralizing liquid may be added to the treated process liquid, preferably with mixing, thereby generating a neutralized treated process liquid.

In the context of the present disclosure, a volume flow is understood to be a flow of liquid passing through a flow system. A volume flow may be characterized by one or more of the following parameters: flow rate (i.e., the volume of liquid flowing per unit of time, typically expressed in units such as liters per minute [L/min]), flow direction (i.e., the orientation or path along which the liquid flows, which may be specified as forward or reverse), velocity (i.e., the speed at which the liquid flows through the system, often expressed in meters per second [m/s]).

In the context of the present disclosure, the flow rate of a liquid may be controlled or regulated by acting on a pump. A positive flow rate indicates forward flow, e.g. caused by forward pumping, while a negative flow rate indicates a reverse flow, e.g. caused by reverse pumping. A flow rate of zero indicates standstill of the liquid, e.g. caused by stopping the pump.

In the context of the present disclosure, the term "upstream" is intended to be understood as the direction or location in the flow system that is closer to the source or point of entry of the liquid, such that components positioned upstream are encountered earlier in the flow path.

In the context of the present disclosure, the term "downstream" is intended to be understood as the direction or location in the flow system that is farther from the source or point of entry of the liquid. Components positioned downstream are encountered later in the flow path relative to upstream components.

In the context of the present disclosure, a treatment liquid is intended to be understood as a liquid introduced into a process to achieve a specific modification or adjustment of the process liquid, such as altering the pH, neutralizing contaminants, or adding desired chemical species to achieve the desired characteristics in the process liquid. For example, a treatment liquid may comprise an acidic or basic compound. For example, a treatment liquid may comprise one or more buffering compounds, salts, and/or solvents.

In the present disclosure, the terms "at least one treatment liquid", "treatment liquid", and "treatment liquid(s)" are all used interchangeably to mean at least one treatment liquid. The combination of the process liquid and the at least one treatment liquid is generally described with the term "process and treatment liquids". Similarly, the terms "at least one liquid parameter", "liquid parameter" and "liquid parameter(s)" are all used interchangeably to mean at least one liquid parameter.

In the context of the present disclosure, the term "mixing" shall be understood as the process of combining at least two liquids to form a homogenous or heterogenous mixture. For example, mixing may be achieved by an active mixer, i.e., a mixer requiring an external energy source or mechanical input to induce mixing. For example, an active mixer may comprise moving elements such as blades or impellers. Exemplary active mixers are mechanical mixers such as blenders, stirrers or paddle mixers, ultrasonic mixers, and pumps. Alternatively or additionally, mixing may be achieved by a passive mixer, i.e., a mixer depending on the natural flow of the liquids and the internal structure of the mixer. For example, a passive mixer may have an internal structure causing turbulence, e.g. comprising baffles or helical structures. Exemplary passive mixers are static mixers, microfluidic mixers and T- or Y-Junction mixers.

The mixing of the process liquid and the treatment liquid(s) may be a direct mixing, i.e., mixing only the treatment liquid(s) and the process liquid, or may be an indirect mixing, i.e., mixing the process liquid and treatment liquid(s) into a carrier liquid, which may be a mixture of the process and treatment liquids, for example. In one embodiment, the carrier liquid may flow in a circulation loop.

In the context of the present disclosure, the term "control" shall be understood as maintaining a variable within a desired or allowable range or set of limits by automatically adjusting system inputs or outputs based on a feedback mechanism. For example, the variable can be a flow rate of a liquid. For example, the feedback mechanism may be based on measurements of a liquid parameter such as the pH value, and/or on a flow rate of a liquid. In the present disclosure, the terms "control", "regulate", and their derivatives are used interchangeably and are intended to have the same meaning. In the present disclosure, the term "adjust" is intended to encompass controlled adjustments.

In the context of the present disclosure, the term "liquid parameter" is intended to be understood as a measurable value indicative of a physical or chemical property of a liquid. For example, the liquid parameter may be measurable with a flow cell. For example, the liquid parameter may be selected from the group consisting of pH, conductivity, optical density / absorbance, redox potential, turbidity, refractive index, total organic carbon (TOC), chemical oxygen demand (COD), viscosity, particle size distribution, inelastic light scattering (also known as Raman spectroscopy), fluorescence, total solid mass, total solid volume, viable cell concentration, total cell concentration, light scattering (also known as optical density), density, and temperature.

In the context of the present invention, the term "pH overshoot" is intended to be understood as the phenomenon that occurs during pH adjustment when the addition of a treatment liquid, such as an acid or base, exceeds the required amount, causing the pH of the solution to move beyond the intended setpoint value or resp. an allowable range of values for the at least one liquid parameter. A pH overshoot results in the pH-adjusted process liquid becoming more acidic or more basic than desired, which may adversely affect the outcome of the method. A pH overshoot can occur due to factors such as rapid or excessive addition of the treatment liquid, insufficient mixing, incorrect control, or delayed reaction times in the system. Reducing or avoiding pH overshoots is crucial in maintaining process stability and achieving a high-quality end product.

In the context of the present invention, the term "allowable range" is intended to be understood as the specified range of values of the at least one liquid parameter within which a pH adjustment process or reaction must be maintained to ensure optimal performance, safety, and compliance with predefined criteria. For example, the allowable range may be determined based on the requirements of the process, including the desired chemical reactions, biological activity, or product specifications. For example, the allowable range may define the acceptable limits around a setpoint value for the liquid parameter(s), beyond which the process may become ineffective, unsafe, and/or result in the production of off-spec material.

In the context of the present invention, the second flow rate is generally composed of a predetermined portion and a variable portion. Therein, it is generally preferred that the second flow rate is the sum of the variable and predetermined portions.

It is generally preferred that the second flow rate is controlled to be zero or positive in order to avoid a reverse flow of the treatment liquid, which would lead to detrimental results such as contaminations in the flow path. Therein, the predetermined portion may have a positive or zero value contributing to the second flow rate, while the variable portion may have a positive, zero, or negative value, as long as the overall value of the second flow rate is zero or positive.

In practice, the predetermined portion may be understood as a "base flow rate" of the treatment liquid, while the variable portion may be understood as a "fine tuning" of the second flow rate.

In an exemplary embodiment, a system carrying out the method may comprise a control unit configured for determining the predetermined portion and the variable portion, determining therefrom the second flow rate, and acting on a treatment liquid pump to cause the second volume flow to have the second flow rate.

The method according to the invention provides improvements over conventional pH adjustment methods. The method has the advantage that it allows for adjusting the pH value in a continuous process. Compared to known methods, the method of the invention achieves a quicker pH adjustment of a process liquid, preferably while at the same time reducing or avoiding pH overshoots.

Various embodiments of the method according to the invention are described in the following. The individual embodiments are in each case individually applicable to the method. The individual embodiments may furthermore be combined with each other at will.

In one embodiment of the method according to the invention, the at least one treatment liquid is acid and/or base, and/or the at least one liquid parameter is the pH value.

The at least one treatment liquid may be two, three or more different liquids. For example, a first treatment liquid may be acid, and a second treatment liquid may be base. For example, the first treatment liquid may be a first acid and a second treatment liquid may be a second acid differing from the first acid in terms of acidic compound and/or concentration and/or composition. For example, the first treatment liquid may be a first base and a second treatment liquid may be a second base differing from the first base in terms of basic compound and/or concentration and/or composition and/or counter ion.

In the context of the present disclosure, the term "acid" is intended to mean a liquid, for example an aqueous solution, comprising at least one acidic compound. Acidic compounds are chemical compounds that can donate a proton ($H^+$ ion) to another substance and/or that can accept an electron pair. Acidic compounds typically have a pH less than 7 in aqueous solutions. Exemplary acidic compounds include, but are not limited to, Hydrochloric Acid, Sulfuric Acid, Acetic Acid, Citric Acid, Phosphoric Acid, Nitric Acid, Lactic Acid, Formic Acid, Tartaric Acid, Malic Acid, Glycine, and partially deprotonated derivatives thereof.

In the context of the present disclosure, the term "base" is intended to mean a liquid, for example an aqueous solution, comprising at least one basic/alkaline compound. Basic compounds are chemical compounds that can accept a proton ($H^+$ ion) from another substance and/or that can donate an electron pair. Basic compounds typically have a pH greater than 7 in aqueous solutions. Exemplary basic compounds include, but are not limited to, Sodium Hydroxide, Potassium Hydroxide, Ammonium Hydroxide, Calcium Hydroxide, Potassium Carbonate, Magnesium Hydroxide, Sodium Carbonate, Sodium Phosphate, and differently protonated derivatives thereof, and derivatives thereof having different counter ions.

The acid/base can be provided in any suitable buffer and concentration known in the field. A person skilled in the art is aware of common interactions between an acid or base and the process liquid to be treated, and will choose a suitable acid or base accordingly.

In an exemplary embodiment, the at least one treatment liquid is acid and the at least one liquid parameter is the pH value. In another exemplary embodiment, the at least one treatment liquid is base and the at least one liquid parameter is the pH value. In another exemplary embodiment, the at least one treatment liquid is at least two treatment liquids, of which at least one is acid and at least one is base, and the at least one liquid parameter is the pH value. In another exemplary embodiment, the at least one treatment liquid is acid and/or base and the at least one liquid parameter is the conductivity.

In one embodiment of the method according to the invention, exactly one treatment liquid is provided. In this embodiment, the exactly one treatment liquid may be acid or may be base, for example.

In commonly known pH adjustment methods, especially in batch methods, both acid and base are provided as a safety measure in case of a pH overshoot. However, by adding a neutralizing component (e.g., base is the neutralizing component if acid is the treatment liquid), the pH adjustment introduces additional salt into the pH-adjusted process liquid which may have detrimental effects on the bioprocess.

Compared to these known methods, the method according to the present invention has the advantage that no neutralizing component is necessary. In case of a pH overshoot, the second flow rate of acid or base is simply decreased with respect to the first flow rate of the process liquid. By continuously mixing the process and treatment liquids, any pH overshoot is thus compensated without introducing additional salt into the pH-adjusted process liquid.

In one embodiment of the method according to the invention, the at least one liquid parameter is determined repeatedly, preferably is determined continuously.

Determining at least one liquid parameter may for example be understood to mean that the at least one liquid parameter is measured/recorded and/or calculated or computed, wherein such calculating or computing may at least partially depend on measurement or record data. For example, the determining may encompass repeatedly measuring the at least one liquid parameter in a sensor or detector, e.g. a flow cell, and transferring the measurement data to a controller.

While it is possible to determine the at least one liquid parameter in regular or irregular intervals, e.g. every 5 seconds or in random intervals or in a predetermined set of different intervals, it is generally preferred that the at least one liquid parameter is determined continuously, as this allows for the most precise control of the variable portion and thus the second flow rate. Determining the liquid parameter in large intervals carries the risk that a sudden pH overshoot may not be reacted to in time, or that a temporary pH overshoot may not be detected at all.

In one embodiment of the method according to the invention, the predetermined portion of the second flow rate is determined depending on the first flow rate.

For example, the first flow rate may be determined repeatedly or continuously, e.g. by reading out a signal representative of the first flow rate, e.g. a signal originating from a pump delivering the process liquid. On the basis of the determined value for the first flow rate, the predetermined portion of the second flow rate may be controlled.

For example, in this embodiment, if the predetermined portion of the second flow rate is predetermined to be a certain proportion (e.g., 50 %) of the first flow rate, then a determined drop in the first flow rate will result in a corresponding drop of the predetermined portion, and thus in a corresponding drop of the second flow rate without the variable portion having to be adjusted by controlling based on the liquid parameter. Thereby, the method of the invention accomplishes a more responsive control and thus a quicker and more reliable pH adjustment of the process liquid than known pH adjustment methods.

In one embodiment of the method according to the invention, the predetermined portion is determined depending on a titration for the pH adjustment of the process liquid with the at least one treatment liquid.

Therein, the phrase "the predetermined portion is determined depending on a titration" may be understood to mean that the predetermined portion is calculated or computed at least partially based on measurement data of a titration (i.e., an analytical method for determining the concentration of certain analytes, e.g. acids or bases, in a solution), and/or based on a titration model, which may be, for example, determined based on a database of titrations or which may be a theoretical model. For example, the predetermined titration curve may be present in any suitable form, such as an analytical equation, a fitted curve, an indexed data set, a lookup table, or the like.

It is commonly known that pH adjustment depends on the buffer capacity of the process liquid. As long as the buffer capacity is not exceeded, the process liquid will resist pH change even when treatment liquid (e.g., acid or base) is added. Once the buffer capacity is exceeded, however, the pH will change more rapidly with each additional unit of treatment liquid. Due to this intricate interaction, conventional methods often elect to slowly add the treatment liquid(s) to the process liquid in order to avoid a pH overshoot.

In the research leading up to the invention, it was found that a titration or titration model of the intended process liquid with the intended treatment liquid(s) is a suitable and practical way of determining a basis for the second flow rate. By basing the second flow rate at least partially on such a titration or titration model, the method of the invention has the advantage that it allows for a precise and quick pH adjustment of the process liquid while reducing the range of required control.

In one embodiment, the predetermined portion is determined based on the inverse of the titration curve for titration of the process liquid with the at least one treatment liquid.

For example, if the pH value is used as liquid parameter, the predetermined portion of the second flow rate may at least partially be based on the following formula:

$$f_p = \left( C^{-1}(pH_s) - C^{-1}(pH_i) \right) \times f_1,$$

wherein:

- $f_p$ is the predetermined portion of the second flow rate,
- $C^{-1}$ is the inverse of the predetermined titration curve,
- $C^{-1}(pH_s)$ is the value of $C^{-1}$ at the setpoint pH value of the pH-adjusted process liquid (i.e., at the pH value to be reached by the pH adjustment),
- $C^{-1}(pH_i)$ is the value of $C^{-1}$ at the initial pH value of the process liquid (i.e., at the pH value of the process liquid prior to pH adjustment), and
- $f_1$ is the first flow rate, which may optionally be repeatedly or continuously determined.

Therein, the initial pH value of the process liquid may be repeatedly or continuously determined, e.g. prior to adding the treatment liquid, and the predetermined portion of the second flow rate may at least partially be determined based thereon.

In one embodiment of the method according to the invention, the variable portion is determined by means of dynamic control, wherein preferably the dynamic control controls on the basis of the difference between an actual value and a setpoint value for the liquid parameter of the pH-adjusted process liquid.

In the context of the present disclosure, the term "control" is intended to be understood as a mechanism of controlling and/or regulating a part of the method of the invention. For example, the dynamic control may be proportional-integral-derivative (PID) control which is known for its high precision and stable control capabilities for adding liquids to one another.

For example, the actual value for the liquid parameter may be repeatedly or continuously determined, e.g. by a flow cell or the like that is set up to determine the liquid parameter of the pH-adjusted liquid.

It is generally preferred that the dynamic control only acts on the second flow rate, e.g. by controlling the rotational speed of at least one pump for the treatment liquid(s).

For example, the dynamic control may receive as an input at least one value representing the difference between the actual value ($pH_a$) and the setpoint value ($pH_s$) of the at least one liquid parameter, such as a difference value or individual actual and setpoint values.

Because the second flow rate can be negative in case of a temporary pH overshoot, it is preferred that the dynamic control comprises means to ensure that the second flow rate has a negative limit of 0 (zero) to avoid reverse pumping of the treatment liquid(s). Such a reverse pumping might lead to contamination of the treatment liquid(s), which is detrimental in the bioprocess.

In embodiments of the invention combining a predetermined portion of the second flow rate with a dynamically controlled variable portion of the second flow rate, the dynamic control range is substantially reduced in most cases because the predetermined portion serves to approximate the setpoint pH value. This results in an overall more precise pH adjustment which is also quicker.

Therein, the dynamic control may be a PID control, and/or the dynamic control may be integrated into the control of the second flow rate. For example, a PID control may be realized without a supervisory system, e.g. without intervention and/or data exchange with a supervisory system.

For example, an integrated PID control may be realized as follows. One or more sensors repeatedly or continuously measure the at least one liquid parameter. These measurements are transferred to a control unit comprising an integrated PID controller. The controller calculates the necessary control actions based on said measurements and directly communicates with one or more actuators to adjust the process accordingly, e.g. by increasing or reducing the second flow rate. This process is continuously repeated to keep the pH value at the desired setpoint.

In this exemplary embodiment, the method has the advantage that it can be implemented in a system of low complexity, as no supervisory system is required. Furthermore, when implemented as part of a more complex bioprocess, the individual control loop is autonomous and therefore independent from other parts of the bioprocess, which may lead to greater robustness of the control mechanism.

In one embodiment of the method according to the invention, the variable portion is further determined on the basis of a process volume, wherein preferably the process volume is determined repeatedly, preferably continuously.

For example, the process volume may be understood as the total volume of liquid contained within a defined section of a liquid handling system. In particular, the process volume may be understood as the entire volume of liquid between the point of entry of the process liquid and the treatment liquid(s) through all associated fluid lines and any containment units (such as chambers, containers, bags or the like) up to the point where the pH-adjusted process liquid is transferred out of this section, e.g. for further processing or for discharge.

For example, the process volume may be determined at least partially based on the volume contained in a containment unit, such as a flexible bag.

In a continuous process, a steady state can be reached where the input flow and output flow are essentially identical. However, changes in the steady state may still occur due to measurement inaccuracies, inhomogeneity, temperature fluctuations, density changes, or the like. In the terms of the present invention, these influences can be compensated for by the variable portion of the second flow rate, whereas it is preferred that no such influences are considered when determining the predetermined portion of the second flow rate.

Determining the variable portion (and thus the second flow rate) on the basis of the process volume has the advantage that the method can be adapted to avoid an increased system pressure due to, e.g., overfilling, thus ensuring that the method runs within optimal parameters. For example, a process volume-controlled method may result in improved consistency and, thus, product quality.

In one embodiment of the method according to the invention, the pH-adjusted process liquid is passed through a recirculation loop.

For example, the recirculation loop may extend between an entry point of the process liquid and/or the treatment liquid(s), which may or may not be mixed prior to entering the recirculation loop, and a discharge port and/or further processing port. The recirculation loop may comprise a sensor and/or detector for determining the at least one liquid parameter of the pH-adjusted process liquid.

For example, the recirculation liquid may be part of a flow system for the continuous treatment of a process liquid, comprising:

- a recirculation loop comprising a compensation tank having an inlet and an outlet and a circulation line connecting the inlet and outlet of the compensation tank to one another, wherein the circulation line comprises a pump for generating a circulation flow,
- at least one sensor for determining at least one liquid parameter,
- supply lines for the process liquid and at least one treatment liquid which are connected to the recirculation loop, and
- discharge lines for treated process liquid and waste streams connected to the recirculation loop.

In the context of this exemplary embodiment, a circulation flow is intended to be understood as a movement of liquid, which may be a continuous movement, through the recirculation loop. It is generally preferred that the circulation flow is generated by a pump, also referred to as "recirculation pump". For example, the liquid may be drawn through an outlet of the compensation tank, transported through the circulation line, and returned to the compensation tank via an inlet. Due to the compensation tank, the recirculation loop according to the invention has an increased retention time of liquid and an increased inertia compared to known systems, which is advantageous for generating a uniform product, i.e. treated process liquid.

In an exemplary embodiment of the flow system, the compensation tank may be arranged along the circulation flow between the supply lines and the sensor. In this embodiment, the compensation tank serves as an additional mixing chamber for the process liquid and treatment liquid(s) before the at least one liquid parameter of the mixture is measured, thus increasing the inertia, which contributes to an improved stability of the liquid parameter(s) when measured at the sensor, and an improved robustness of the treatment process. Without wishing to be bound by theory, it is currently assumed that due to the increased retention time and mixing volume of the process liquid and treatment liquid(s), short-term control deviations are dampened and at the same time, the overall rate of change of the liquid parameter decreases. As a result, the at least one liquid parameter (e.g., the pH value) of the treated process liquid may be determined more reliably and more precisely.

In a further exemplary embodiment of the flow system, the supply lines for the process liquid and the treatment liquid may be connected to the recirculation loop at spaced-apart locations. In another exemplary embodiment independent therefrom, the discharge lines for treated process liquid and waste streams may be connected to the recirculation loop at spaced-apart locations. For example, in case that the process liquid and treatment liquid(s) may differ significantly with respect to the at least one treatment parameter, this may lead to adverse effects if process and treatment liquids are directly mixed prior to entering the recirculation loop, such as unintended warming or high local concentrations of the treatment liquid. In this exemplary embodiment, the process and treatment liquids are admixed into the circulation flow which comprises a mixture of process and treatment liquids having an intermediate liquid parameter. Thereby, the recirculation loop has the advantage that it allows for gentler mixing of the process and treatment liquids, thereby avoiding certain adverse effects. The aforementioned advantages are particularly pronounced when the process and treatment liquids enter the recirculation loop via the circulation line, because of the increased turbulence associated therewith. For example, if the discharge lines for treated process liquid and waste streams are connected to the recirculation loop at separate locations, off-specification product can be directly and efficiently discarded without passing through any shared pathways, thereby eliminating dead volume and reducing the risk of cross-contamination.

In a further exemplary embodiment of the flow system, the supply and discharge lines may be set up so that their respective flow rates can be controlled independently of one another, e.g. by at least one PID controller. In this exemplary embodiment, the flow system has the advantage that it allows for precise control of the liquid flow.

In a further exemplary embodiment of the flow system, the discharge line for treated process liquid may be connected to the recirculation loop by means of a void-free valve. Especially in the context of a continuous process, it has shown to be highly advantageous to avoid contaminations within the flow system. Using a void-free valve for the connection between the recirculation loop and the discharge line for treated process liquid contributes to a reduction of unwanted contaminations. Exemplary void-free valves include diaphragm valves.

In a further exemplary embodiment of the flow system, the circulation flow may have a flow rate which is at least 10 times the flow rate in the supply lines. In general, a difference in flow rate results in the formation of turbulence in the circulation line and in the compensation tank, which causes the process and treatment liquids to mix. The research leading up to the invention has surprisingly found that a flow rate difference of at least 10-fold ensures homogenous mixing not only in the circulation line but also within the compensation tank, such that, for example, an active mixer is not necessary. A recirculation loop without an active mixer is advantageous because it requires less maintenance. The flow rate of the circulation flow may be at least 10 times, at least 20 times, or at least 30 times higher than the flow rate in the supply lines, e.g. up to 100 times higher than the flow rate in the supply line.

In a further exemplary embodiment of the flow system, the compensation tank may contain a variable amount of liquid, which is intended to be understood in that either the compensation tank has a constant inner volume and a variable fill level, or the compensation tank has a variable inner volume, e.g. in form of a flexible bag. In this embodiment, the flow system has the advantage of reducing waste production and keeping product loss at a minimum.

In a further exemplary embodiment of the flow system, the compensation tank may be set up so that the amount of liquid in it is continuously measured and the flow system is set up to regulate the circulation flow rate depending on the amount of liquid in the compensation tank. For example, the amount of liquid present in the compensation tank may be measured by weighing, or may e.g. be measured by a float sensor or any other suitable sensor. For example, the recirculation flow rate may be regulated at least partially based on the fill level of the compensation tank while treating a liquid in order to ensure homogeneous mixing while reducing or avoiding foaming for each fill level.

In a further exemplary embodiment of the flow system, the compensation tank may be mounted in a mass-decoupled manner. Therein, the term "mass-decoupled" refers to the design and mounting of a component, such as a tank in a flow system, in a manner that isolates it from external vibrations, forces, or movements. Thereby, the weight of the tank may be measured independently of any dynamic forces or mechanical interactions from connected lines, equipment, or structural elements. For example, the compensation tank may be weighed to detect the fill level. A special geometry of the line connections may decouple the weighing and thus minimize the influence of the connected lines on the weighing signal. For example, angled connectors may be used to align the lines horizontally so that the compensation tank can move vertically without increased force. By minimizing or eliminating the influence of external factors, the weight of the tank can be accurately determined through weighing. This, in turn, provides for improved process control when using the flow system.

In a further exemplary embodiment of the flow system, the recirculation loop may further comprise a control unit which is set up to continuously receive measurement data representative of the at least one liquid parameter and to continuously receive measurement data representative of the amount of liquid in the compensation tank, and which is further set up to continuously control the flow rates in the supply and discharge lines depending on the received measurement data. For example, the control unit may directly or indirectly communicate with the at least one sensor to receive, repeatedly or continuously, measurement data of the at least one liquid parameter. The control unit may have means to calculate, based on the at least one liquid parameter, a rotational speed of at least one pump arranged in one of the supply lines or discharge lines, and may directly or indirectly act on said pump accordingly to regulate the flow of liquids in the flow system. Moreover, the control unit may have means to act on at least one valve in order to further regulate the flow of liquids in the flow system, e.g. by opening or closing said valve.

In a further exemplary embodiment of the flow system, the treatment liquid is acid and the recirculation loop does not comprise a supply line for base, or the treatment liquid is base and the recirculation loop does not comprise a supply line for acid, wherein the liquid parameter is the pH value. For example, if the pH value falls outside the allowable range due to excessive addition of acid/base, additional process liquid is introduced into the recirculation loop to bring the pH value back into the allowable range. A dedicated line with pump for adding neutralizing liquid (i.e.: base/acid) thus becomes obsolete.

In a further exemplary embodiment, the flow system may be part of a device for the continuous treatment of a process liquid comprising a flow system according to the invention, in particular a recirculation loop. For example, the device may additionally comprise at least one reservoir in which a respective treatment liquid is stored and from which it can be supplied to the flow system.

In an exemplary embodiment of said device, the device may further comprise a flow path arranged to receive treated process liquid, wherein the flow path is configured such that the passage of the treated process liquid through the flow path requires a predetermined minimum period of time. Precise incubation times are often part of biotechnological processes, such as in the case of viral inactivation, where a process liquid may be brought to a predefined pH value, may then be kept at said pH value for a certain incubation time, and may then be further processed. For example, in such a setting, a flow path may allow for precise treatment of the process liquid by ensuring that the incubation time of the pH-adjusted liquid is complied with. For example, the flow path may be connected to the discharge line for treated process liquid, i.e., downstream of the recirculation loop. For example, the flow path may open into another component of the device, such as a further recirculation loop.

In a further exemplary embodiment of the device, the device may further comprise a surge tank,

- wherein an inlet of the surge tank is connected to an outlet of an upstream unit operation,
- wherein the surge tank is set up to receive, and optionally to blend, an incoming process material,
- wherein optionally the surge tank is set up to receive a buffer,
- wherein an outlet of the surge tank is connected to the supply line for process liquid,
- wherein preferably the surge tank is set up to provide an essentially continuous outflowing liquid stream,
- wherein optionally the surge tank comprises an active mixer,
- wherein optionally the surge tank comprises means for determining a fill level of the surge tank,
- wherein optionally the surge tank comprises means for determining a liquid parameter.

The device according to the present embodiment may be used for adjusting the pH of the process liquid, for inactivating viruses in the process liquid, for solvent/detergent inactivation, for buffer conditioning, for transfection or transformation of cells, for plasmid production, for lysis of cells, for production of viral vectors, for carrying out a bio-conjugation reaction, for in vitro transcription, or for vesicle encapsulation. For example, the device may be used for treating a cell suspension, e.g. by acidifying, to precipitate DNA and cell fragments, e.g. prior to a filtration step. For example, the device may be used to add an excipient to a composition comprising an active compound.

Therein, the mixing of the at least one treatment liquid with the process liquid may take place in the recirculation loop.

For example, the process liquid and the treatment liquid(s) may enter into the recirculation loop at separate points, such that they are initially admixed to the pH-adjusted process liquid which circulates there. This allows for a gentler pH adjustment because the process liquid is only brought into contact with the treatment liquid(s) in a diluted - and thus chemically less aggressive - state.

In one embodiment of the method according to the invention, the method further comprises:

    d. passing the pH-adjusted process liquid through a flow path with a predetermined residence time to produce a treated process liquid, preferably with the flow path extending at least in sections outside the recirculation loop,
    e. adding a neutralizing liquid to the treated process liquid.

In the context of the present invention, the term "residence time" may be understood to mean a period during which a liquid is maintained at a setpoint pH value to achieve a desired treatment outcome, such as virus inactivation or the completion of a chemical reaction. Such a period may be critical for ensuring that the process achieves its intended effect. For example, the residence time may be predetermined based on the treatment being performed.

In the context of the present invention, the term "neutralizing liquid" may be understood to mean a liquid which counter-acts the effects of the treatment liquid(s) on the pH value. For example, if the treatment liquid is acid, the neutralizing liquid is base and vice versa.

For example, the neutralizing liquid may be selected based on its ability to effectively balance the pH without introducing unwanted by-products, such as certain salts, or otherwise adversely affecting the method or treated process liquid.

In this embodiment, the method according to the invention has the advantage that the process liquid is not exposed to the pH adjustment for a longer-than-necessary period.

Especially in cases where the adjusted pH may adversely affect the process liquid, this ensures that such adverse effects are kept to a minimum, thereby achieving a higher product quality.

In one embodiment of the method according to the invention, prior to providing the at least one treatment liquid, a first volume of process liquid is provided while not providing any treatment liquid.

This embodiment is relevant in the initial phase of a continuous bioprocess. For example, the first volume of process liquid may be provided to fill a flow system in which the method is carried out with liquid, preferably including at least one sensor measuring the liquid parameter. The provision of treatment liquid(s) may ensue, for example, after the first measurement data of the at least one liquid parameter is determined, optionally following a filling period to allow the fluid lines of the flow system to fill completely. Following the initial phase, the method may be carried out normally, thus achieving the advantages laid out herein.

Further features and advantages of the method according to the invention emerge from the following description of exemplary embodiments where reference is made to the attached drawings.

In the drawings,

Fig. 1   shows a schematic overview of an embodiment of the pH adjustment concept,

Fig. 2   shows a pH adjustment graph of an embodiment of the present invention,

Fig. 3   shows a pH adjustment graph of an embodiment of the present invention, and

Fig. 4   shows a comparison between an embodiment of the present invention and a conventional pH adjustment method.

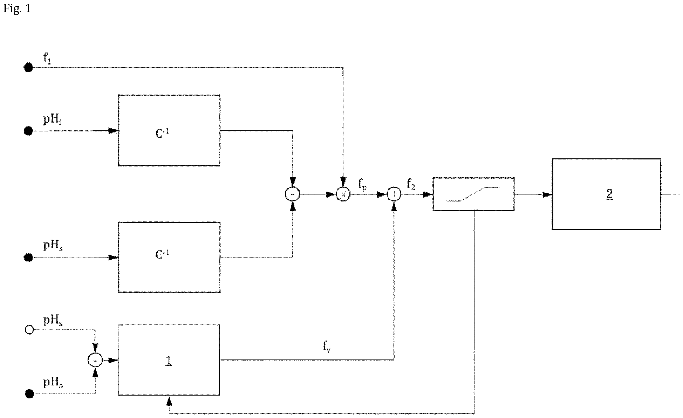

Fig. 1 shows a schematic overview of an embodiment of the pH adjustment concept. In this exemplary and non-limiting embodiment, the liquid parameter is the pH value.

In a first stage, based on the initial pH value of the process liquid, $pH_i$, and the setpoint pH value of the pH-adjusted process liquid, $pH_s$, a flow rate ratio of the process liquid and the treatment liquid(s) is predetermined based on a titration of the process liquid and the treatment liquid(s), $C^{-1}$. Taking into account the first flow rate of the process liquid ($f_1$), which is preferably continuously determined, a predetermined portion of the second flow rate ($f_p$) is determined.

When the actual pH value of the pH-adjusted process liquid, $pH_a$, is determined (e.g., when a pH sensor continuously provides pH measurement values), the action of the treatment liquid pump - and thereby the second flow rate - is controlled accordingly, e.g. by a dynamic controller 1 receiving the values for $pH_a$ and $pH_s$, to determine a variable portion of the second flow rate ($f_v$). By adding the predetermined and variable portions of the second flow rate ($f_p$, $f_v$), the second flow rate ($f_2$) is determined and the treatment liquid pump 2 is actuated accordingly.

Example 1: Controlled pH adjustment in continuous operation at 20 L/h

The method of the invention was used to adjust the pH of a process liquid (initial pH value: $pH_i$ = 4.4) with a TRIS glycine buffer as treatment liquid. The process liquid was provided at a first flow rate of $f_1$ = 20 L/h. The setpoint pH value, $pH_s$, of the pH-adjusted process liquid was $pH_s$ = 3.8, with an allowable range of the pH-adjusted process liquid between 3.7 and 3.9. According to a titration of the process liquid with the treatment liquid, a predetermined portion of the second flow rate, $f_p$, was predetermined to be approx. 3.5 rpm of the treatment liquid pump.

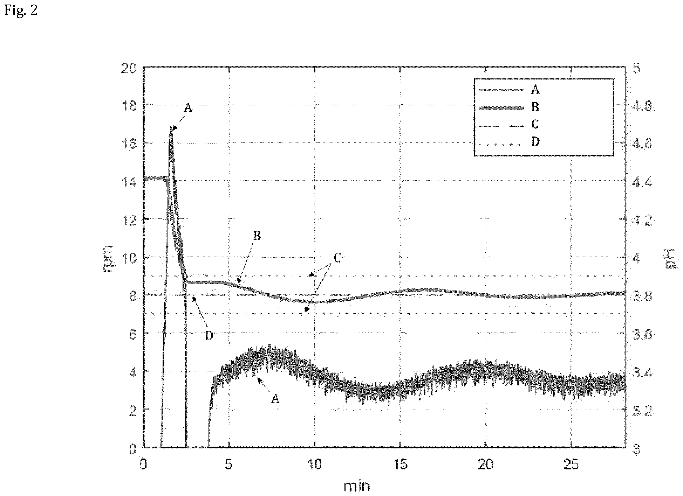

Fig. 2 shows the setpoint pH value $pH_s$ (line D; right y-axis), the allowable range of the setpoint pH value (lines C; right y-axis), the actual pH value $pH_a$ (line B; right y-axis) and the treatment liquid pump speed (line A; left y-axis, given in rotations per minute, rpm) over time, which is given in minutes (min).

The pH adjustment method was initiated at the 0-minute timestamp. For the first minute, only process liquid was pumped in order to fill the system with liquid. At the 1-minute timestamp, the treatment liquid pump was actuated by the controller to add treatment liquid into the system, wherein the second flow rate was controlled to apply a volume of treatment liquid to compensate for the previously supplied process liquid. Thus, the second flow rate was increased to a value corresponding to a multitude of the predetermined portion. As a result of this pre-control, the pH value decreased towards the setpoint value. After approx. 1.5 minutes of pumping the treatment liquid (timestamp approx. 2.5 minutes), the pH value of the pH-adjusted liquid was determined to be within the allowable range, and the second flow rate was set to zero.

After 4 minutes, a dynamic controller such as a PID controller was activated. From this point on, the controller acted to control the second flow rate based on the $f_p$ value. The pH value was controlled to be within the allowable range. Over time, a diminishing control difference between the $pH_s$ and $pH_a$ values was observed, starting at approx. the 20-minute timestamp.

The experiment shows that the method of the invention achieves quick and precise pH control in a continuous process.

Example 2: Controlled pH adjustment in continuous operation at 1 L/h

The method of the invention was additionally tested in a continuous process having a low flow rate. Such processes are notoriously difficult for the purpose of pH control because small inaccuracies in the control of the treatment liquid pump may lead to large deviations in the resulting pH value. Also, due to the lower overall flow rates, mixing may be difficult and even incomplete, which makes determining the pH value less reliable.

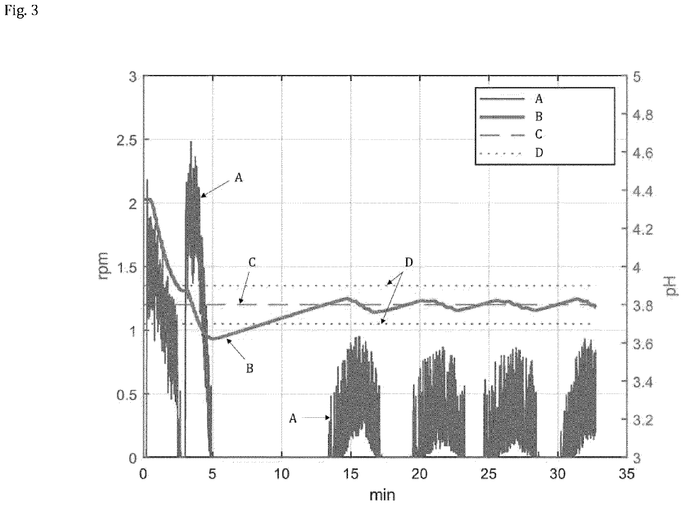

The experimental setup was identical to the one described in Example 1 above, except that the first flow rate was set to $f_1$ = 1 L/h. The results are shown in Fig. 3, which shows the setpoint pH value $pH_s$ (line C; right y-axis), the allowable range of the setpoint pH value (lines D; right y-axis), the actual pH value $pH_a$ (line B; right y-axis) and the treatment liquid pump speed (line A; left y-axis, given in rotations per minute, rpm) over time, which is given in minutes (min).

In this experiment, the initial phase of adding the treatment liquid was initiated immediately after starting the supply of process liquid. The pH was determined to be within the allowable range after approx. 3.5 minutes. The PID controller was activated approx. at the 4-minute timestamp. Due to an initial increase in the second flow rate by the controller, the $pH_a$ value briefly went outside of the allowable range around the 5-minute timestamp. The controller reacted to this by lowering the second flow rate to zero. Due to the continuous supply of process fluid, the $pH_a$ value continuously increased until it returned into the allowable range at approx. the 9-minute timestamp. This was possible without adding any neutralizing agent in the process. At approx. the 13-minute timestamp, the $pH_a$ value reached the setpoint value $pH_s$, and the controller controlled the second flow rate to be between 0 and 1 rpm. As a result, the pH value stayed within the allowable range for the entirety of the remaining measurement.

The experiment shows that the method of the invention can be applied to adjust the pH in a continuous process having a low flow rate. Even in this difficult setting, the pH adjustment is quick and precise.

Example 3: Comparison between the method of the invention and a conventional PID-controlled pH adjustment method

The pH of a process liquid having an initial pH value of $pH_i$ = 4.2 was intended to be adjusted to a setpoint value of $pH_s$ = 3.8, with an allowable range between pH 3.7 and 3.9. A PBS acetate buffer was used as treatment liquid.

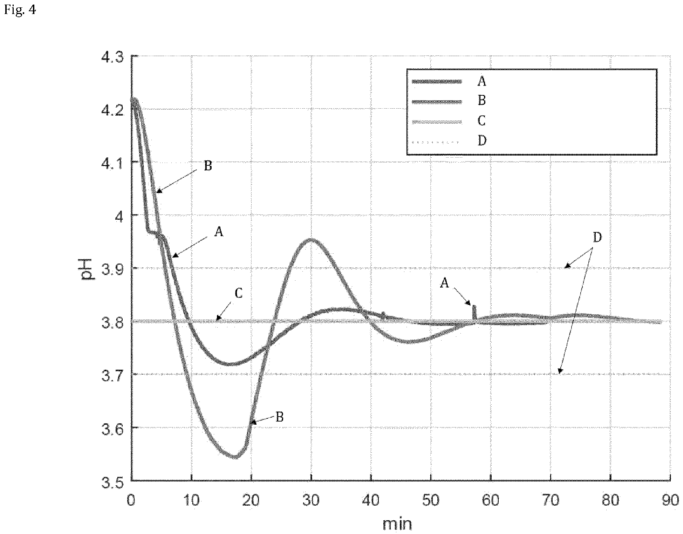

The method of the invention was compared to a previously known method where the pH is controlled by a conventional PID controller. The parameters of the conventional PID controller were empirically optimized for the solution and flow used in order to achieve an adequate settling time of approximately 70 minutes. Fig. 4 shows the resulting graphs ($pH_s$ value: line C; allowable range: lines D; conventional pH adjustment method: line B; pH adjustment method of the invention: line A).

In case of the method of the invention, the initial phase of adding the treatment liquid was maintained for approx. 3 minutes, after which a $pH_a$ value between 3.9 and 4.0 was reached. A PID controller was switched on shortly thereafter to further control the pH adjustment. Starting at approx. the 30-minute timestamp, the controller had stabilized the pH value and maintained it for the remainder of the measurement duration. After approximately 55 minutes, a disturbance was generated in the form of an increased flow through the system. The fault was immediately corrected. Due to the pH control, the $pH_a$ value did not go beyond the allowed range.

In the case of the previously known method, the $pH_a$ value dropped significantly below the allowable range, down to a minimum $pH_a$ value of approx. 3.55 at the 18-minute timestamp, constituting a first pH overshoot. From there, due to applying a neutralizing agent, the $pH_a$ value shot up and went beyond the allowable range again, reaching a maximum $pH_a$ value of approx.

3.95 at the 30-minute timestamp, thus constituting a second pH overshoot. The $pH_a$ value was stabilized by the conventional PID controller approx. at the 55-minute timestamp.

The two pH overshoots generated by the previously known method are relevant for the process. One requirement is that the pH value may not deviate from the setpoint value beyond the allowable range in order not to jeopardize the product. This was not accomplished using the controller setup shown here, meaning that a significantly longer adjustment time must be accepted to reduce the pH overshoot. With the current parameterization of the previously known PID controller, the method according to the invention reaches a stabilized $pH_a$ value almost 30 minutes faster.

With a more conservative choice of parameters, the PI controller from the prior art would become slower and the time saving would thus increase further.

The experiment shows that the method according to the invention is both more precise and quicker in adjusting the pH of a process liquid in a continuous process than a method from the prior art.

**Claims**

1. A method for adjusting the pH of a process liquid in a continuous process, comprising:

    a. providing the process liquid in a first volume flow having a first flow rate,
    b. providing at least one treatment liquid in a second volume flow having a second flow rate,
    c. mixing the at least one treatment liquid with the process liquid to produce a pH-adjusted process liquid,

        - wherein the second flow rate is composed of a predetermined portion and a variable portion,
        - wherein the variable portion is controlled based on at least one liquid parameter of the pH-adjusted process liquid.

2. The method according to claim 1,

    - wherein the at least one treatment liquid is acid and/or base, and/or wherein the at least one liquid parameter is the pH value.

3. The method according to any one of the preceding claims,

    - wherein exactly one treatment liquid is provided.

4. The method according to any one of the preceding claims,

- wherein the at least one liquid parameter is determined repeatedly, preferably is determined continuously.

5. The method according to any one of the preceding claims,

- wherein the predetermined portion of the second flow rate is determined depending on the first flow rate.

6. The method according to any one of the preceding claims,

- wherein the predetermined portion is determined depending on a titration for the pH adjustment of the process liquid with the at least one treatment liquid.

7. The method according to claim 6,

- wherein the predetermined portion is determined based on the inverse of the titration curve for titration of the process liquid with the at least one treatment liquid.

8. The method according to any one of the preceding claims,

- wherein the variable portion is determined by means of dynamic control,
- wherein preferably the dynamic control controls on the basis of the difference between an actual value and a setpoint value for the liquid parameter of the pH-adjusted process liquid.

9. The method according to claim 8,

- wherein the dynamic control is a PID control, and/or wherein the dynamic control is integrated into the control of the second flow rate.

10. The method according to any one of the preceding claims,

- wherein the variable portion is further determined on the basis of a process volume,
- wherein preferably the process volume is determined repeatedly, preferably continuously.

11. The method according to any one of the preceding claims,

- wherein the pH-adjusted process liquid is passed through a recirculation loop.

12. The method according to claim 11,

- wherein the mixing of the at least one treatment liquid with the process liquid takes place in the recirculation loop.

13. The method according to any one of the preceding claims, further comprising:

d. passing the pH-adjusted process liquid through a flow path with a predetermined residence time to produce a treated process liquid, preferably with the flow path extending at least in sections outside the recirculation loop,
e. adding a neutralizing liquid to the treated process liquid.

14. The method according to any one of the preceding claims,

- wherein, prior to providing the at least one treatment liquid, a first volume of process liquid is provided while not providing any treatment liquid.

Fig. 1

Fig. 2

Fig. 3

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 132 916 A (GULAIAN MARTIN [US] ET AL) 21 July 1992 (1992-07-21) * column 1, line 6 - column 2, line 35 * * column 3, line 5 - column 12, line 68; figures 1-16 * ----- | 1-14 | INV. G05D21/02 G05D11/00 C02F1/66 |
| X | US 2018/017948 A1 (DASH SACHINDRA K [US] ET AL) 18 January 2018 (2018-01-18) * page 1, paragraph 1 - paragraph 3 * * page 2, paragraph 22 - page 4, paragraph 48; figures 1-4 * ----- | 1-14 | |

**TECHNICAL FIELDS SEARCHED      (IPC)**

G05D

The present search report has been drawn up for all claims

| Place of search | Date of completion of the search | Examiner |
|---|---|---|
| Munich | 7 March 2025 | Burchielli, M |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

..............................................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 20 0637

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | | Publication date | Patent family member(s) | | Publication date |
|---|---|---|---|---|---|
| US 5132916 | A | 21-07-1992 | AU | 633994 B2 | 11-02-1993 |
| | | | CN | 1056756 A | 04-12-1991 |
| | | | DE | 69011851 T2 | 15-12-1994 |
| | | | EP | 0457989 A1 | 27-11-1991 |
| | | | JP | 2632609 B2 | 23-07-1997 |
| | | | JP | H04232515 A | 20-08-1992 |
| | | | KR | 910020534 A | 20-12-1991 |
| | | | MX | 173341 B | 17-02-1994 |
| | | | US | 5132916 A | 21-07-1992 |
| US 2018017948 | A1 | 18-01-2018 | EP | 3270240 A2 | 17-01-2018 |
| | | | US | 2018017948 A1 | 18-01-2018 |

EPO FORM P0459

For more details about this annex : see Official Journal of the European Patent Office, No. 12/82